# EUROPÄISCHE PATENTANMELDUNG

(11) **EP 0 575 655 A1**
(43) Veröffentlichungstag der Anmeldung: **29.12.1993**
(21) Anmeldenummer: 92110749.6
(22) Anmeldetag: 25.06.1992
(51) Int. Cl.: H04L 12/56, H04Q 11/04

(54) **Verfahren zum Einrichten von virtuellen Verbindungen**

(71) Anmelder: SIEMENS AKTIENGESELLSCHAFT, D-80333 München (DE)
(72) Erfinder: Grabowski, Karl-Heinz, Dipl.-Ing., W-8038 Gröbenzell (DE)

(57) **Zusammenfassung**

In einem eine Mehrzahl von Verbindungsleitungen aufweisenden Leitungsbündel sind eine Vielzahl von virtuellen Verbindungen mit einem unterschiedlichen Bedarf an Übertragungskapazität einrichtbar. Im Zuge einer virtuellen Verbindung werden verbindungszugehörige Nachrichtenzellen fester Länge nach dem ATM (asynchronous transfer mode)-Verfahren übertragen. Die virtuellen Verbindungen werden nach Maßgabe ihres Bedarfs an Übertragungskapazität Verbindungsklassen zugeordnet. Einer Anforderung auf Einrichtung einer neuen virtuellen Verbindung wird nur entsprochen, wenn momentan eine der höchsten Verbindungsklasse zugehörige Verbindung einrichtbar wäre. Abweichend hiervon kann auch eine der niedrigsten Verbindungsklasse zugehörige virtuelle Verbindung eingerichtet werden, wenn auf den einzelnen Verbindungsleitungen momentan nur eine der niedrigsten Verbindungsklasse zugehörige virtuelle Verbindung einrichtbar ist.

## Beschreibung

Die Erfindung betrifft ein Verfahren und eine das Verfahren realisierende Schaltungsanordnung gemäß dem Oberbegriff des Anspruchs 1 oder 2 bzw. des Anspruchs 4 oder 5.

Mit der Einrichtung einer virtuellen Verbindung zwischen zwei Telekommunikationsstellen wird der Weg für die Nachrichtenzellen, die im Zuge dieser Verbindung nach einem asynchronen Übertragungsverfahren übertragen werden sollen, festgelegt. Dabei muß auf allen Wegabschnitten die Transportrate für die maximale Nachrichtenzellenrate einer jeweiligen virtuellen Verbindung ausreichen. Ein Wegabschnitt kann beispielsweise durch ein zwei Kommunikationseinrichtungen miteinander verbindendes Bündel von Verbindungsleitungen gegeben sein. Die Kommunikationseinrichtungen können beispielsweise wiederum durch die Leitungsabschlußeinrichtungen zweier Breitbandvermittlungseinrichtungen oder zweier Koppelstufen einer Breitbandvermittlungseinrichtung gegeben sein. Die Bereitstellung von Übertragungskapazität auf den jeweiligen Wegabschnitten für die Einrichtung einer virtuellen Verbindung erfolgt nach einem vorgegebenen Auswahl-Algorithmus in einer der Kommunikationseinrichtungen.

Aus der EP-A-0447 841 ist bereits ein Verfahren zum Einrichten von virtuellen Verbindungen über eine nach einem asynchronen Transfermodus arbeitende Vermittlungseinrichtung bekannt geworden. Bei diesem Verfahren werden einerseits die einzelnen virtuellen Verbindungen nach Maßgabe der angemeldeten maximalen Nachrichtenzellenrate Verbindungsklassen, die sich auf Größenbereiche dieser maximalen Nachrichtenzellenrate beziehen, und andererseits die auf den Verbindungsleitungen jeweils noch verfügbaren freien Transportraten Verbindungsklassen mit entsprechenden maximalen Nachrichtenzellenraten-Grenzwerten zugeordnet. In einer jeweiligen Kommunikationseinrichtung ist darüber hinaus ein Belegungsspeicher vorgesehen, in welchem für jede der Verbindungsleitungen eine Mehrzahl von Speicherplätzen reserviert ist. Jeder Speicherplatz weist binär kodierte Informationen über die auf der zugehörigen Verbindungsleitung einrichtbaren, jeweiligen Verbindungsklassen zugehörigen virtuellen Verbindungen auf. Zur Einrichtung einer virtuellen Verbindung wird dabei eine Verbindungsleitung ausgewählt, die gemäß ihrer momentanen binären Kennzeichnung für die Einrichtung einer virtuellen Verbindung der angeforderten Verbindungsklasse ausreicht.

Bei einem solchen Verfahren macht es sich als nachteilig bemerkbar, daß mit steigender Auslastung eines Bündels von Verbindungsleitungen zunehmend virtuelle Verbindungen mit hohen Nachrichtenzellenraten abgewiesen werden müssen, während virtuelle Verbindungen mit niedrigen Nachrichtenzellenraten weiterhin eingerichtet werden können.

Der Erfindung liegt das Problem zugrunde, ein Verfahren und eine Schaltungsanordnung anzugeben, mit dem und mit der die Wahrscheinlichkeit zur Einrichtung einer virtuellen Verbindung unabhängig von der von ihr benötigten Nachrichtenzellenrate vergleichmäßigt wird.

Eine Lösung des Problems ist bei einem Verfahren gemäß dem Oberbegriff dadurch gegeben, daß eine virtuelle Verbindung nur dann eingerichtet wird, wenn auf den einzelnen Verbindungsleitungen momentan zumindest eine der höchsten Verbindungsklasse zugehörige virtuelle Verbindung einrichtbar ist. Diese Lösung bringt eine Gleichverteilung der Wahrscheinlichkeit der Annahme von virtuellen Verbindungen mit unterschiedlichen maximalen Nachrichtenzellenraten mit sich.

Eine weitere Lösung besteht darin, daß abweichend von der Maßnahme der ersten Lösung auch der niedrigsten Verbindungsklasse zugehörige virtuelle Verbindungen eingerichtet werden, wenn auf den Verbindungsleitungen eine Transportrate zur Verfügung steht, die nur für die Einrichtung einer der niedrigsten Verbindungsklasse zugehörigen virtuellen Verbindung ausreicht. Durch diese Maßnahme wird für den Fall einer hohen Verbindungsleitungsauslastung durch wiederholtes Heranführen an die Auslastungsgrenze eine erhöhte Transportleistung erzielt, wobei die im allgemeinen einen Großteil der Anzahl der virtuellen Verbindung ausmachenden virtuellen Verbindungen mit einem niedrigen Bedarf an Transportrate priorisiert sind.

Gemäß einer Weiterbildung der Erfindung wird bei einem Gleichzeitigen Vorliegen von Anforderungen nach Einrichtung von virtuellen Verbindungen mit unterschiedlichen Verbindungsklassen eine virtuelle Verbindung mit einer jeweils höchsten Verbindungsklasse priorisiert. Durch diese Maßnahme ergeben sich für virtuelle Verbindungen mit hohen Verbindungsklassen eine erhöhte Wahrscheinlichkeit der Annahme, wobei die Auslastung einer Verbindungsleitung durch baldmöglichstes Heranführen an die Auslastungsgrenze verbessert wird.

Die Erfindung wird nun in zum Verständnis erforderlichem Umfang anhand einer Figur als Ausführungsbeispiel näher beschrieben.

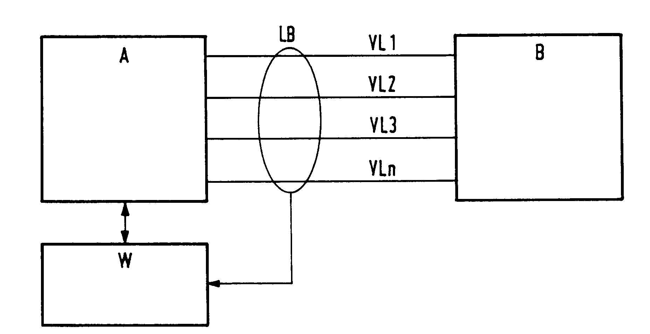

Fig. 1 zeigt schematisch zwei Kommunikationseinrichtungen A, B, die über eine Mehrzahl von Verbindungsleitungen VL1.. ..VLn miteinander verbunden sind. Die Kommunikationseinrichtungen können beispielsweise durch Leitungsabschlußeinrichtungen von zwei Breitband-Vermittlungsstellen eines Breitband-Vermittlungssystems oder durch Leitungsabschlußeinrichtungen zweier Koppelstufen einer Breitband-Vermittlungsstelle gegeben sein. Die Gesamtheit der Verbindungsleitungen möge ein Richtungsbündel LB bilden. Auf den einzelnen Verbindungsleitungen möge jeweils eine Mehrzahl von virtuellen Verbindungen einrichtbar sein. Im Zuge einer virtuellen Verbindung werden verbindungszugehörige Nachrichtenzellen fester Länge nach einem asynchronen Übertragungsverfahren übertragen. Die Nachrichtenzellen weisen jeweils in bekannter Weise einen Nutzdatenteil und einen diesem vorangestellten Nachrichtenzellenkopf auf. In dem Nutzdatenteil erfolgt die Übertragung der eigentlichen Nachrichtensignale. Unter Nachrichtensignalen sollen dabei Nachrichten- und Textsignale sowie Sprach- bzw. Bildsignale in digitaler Form verstanden werden. Ein Nachrichtenzelkopf weist u.a. eine sog. virtuelle Kanalnummer auf, durch die eine jeweilige virtuelle Verbindung bezeichnet ist. In Übertragungspausen werden im übrigen den Nachrichtenzellen entsprechende Leerzellen übertragen. Zwischen den Kommunikationseinrichtungen A und B können also eine Vielzahl von virtuellen Verbindungen eingerichtet sein, wobei eine virtuelle Verbindung im allgemeinen einen Übertragungsweg in jede der beiden Übertragungsrichtungen einschließt.

Der Aufbau einer virtuellen Verbindung erfolgt in an sich bekannter Weise dadurch, daß eine Teilnehmerstelle eine Anforderungszelle zur Einrichtung einer virtuellen Verbindung an die Vermittlungseinrichtung aussendet, mit der sie verbunden ist. Eine Anforderungszelle enthält u.a. die Zieladresse der gewünschten Ziel-Teilnehmerstelle und den gewünschten Bedarf an Übertragungskapazität. Bei einer virtuellen Verbindung, in deren Zuge Nachrichtenzellen konstanter Länge nach einem asynchronen Übertragungsverfahren übertragen werden, ist die Übertragungskapazität durch die Nachrichtenzellenrate gegeben. Voraussetzung für die Einrichtung einer virtuellen Verbindung zwischen zwei Teilnehmerstellen ist, daß auf sämtlichen, die beiden Teilnehmerstellen verbindenden Streckenabschnitten mindestens die angeforderte maximale Nachrichtenzellenrate belegt werden kann. Erreicht beim Aufbau einer virtuellen Verbindung eine Anforderungszelle beispielsweise die Kommunikationseinrichtung A und soll die virtuelle Verbindung über die Kommunikationseinrichtung B weitergeführt werden, so wird einer Wegesucheinrichtung W eine Information zugeführt, die den Bedarf an Übertragungskapazität für die aufzubauende virtuelle Verbindung bezeichnet. Eine jeweilige virtuelle Verbindung wird nach Maßgabe ihres Bedarfs an Übertragungskapazität einer Verbindungsklasse zugeordnet. Eine Verbindungsklasse deckt einen abgegrenzten Bereich von maximalen Übertragungskapazitäten bzw. Nachrichtenzellenraten ab. Virtuelle Verbindungen mit einem hohen Bedarf an Übertragungskapazität werden einer hohen Verbindungsklasse und virtuelle Verbindungen mit einem niedrigen Bedarf an Übertragungskapazität einer niedrigen Verbindungsklasse zugeordnet. In der Wegesucheinrichtung werden Informationen über die auf den einzelnen Verbindungsleitungen des Richtungsbündels momentan einrichtbaren, bestimmten Verbindungsklassen zugehörigen virtuellen Verbindungen bereitgehalten. Beim Aufbau einer virtuellen Verbindung wird die dem Bedarf an Übertragungskapazität der aufzubauenden virtuellen Verbindung entsprechende Verbindungsklasse mit den momentan auf den einzelnen Verbindungsleitungen des Richtungsbündels einrichtbaren virtuellen Verbindungen verglichen. Ist momentan auf den einzelnen Verbindungsleitungen mindestens eine virtuelle Verbindung mit einer Verbindungsklasse verfügbar, die gleich oder höher als die angeforderte Verbindungsklasse ist, so kann die betreffende Verbindung prinzipiell aufgebaut werden.

Nach einer erfindungsgemäßen Maßnahme ist vorgesehen, daß eine virtuelle Verbindung nur dann eingerichtet wird, wenn auf den einzelnen Verbindungsleitungen momentan zumindest eine der höchsten Verbindungsklasse zugehörige virtuelle Verbindung einrichtbar ist. Die durch diese Maßnahme gegebene Bedingung kann dadurch erfüllt werden, daß mit dem Eintreffen einer Anforderungszelle eine Prüfung in der Wegesucheinrichtung auf ein Vorliegen einer Information durchgeführt wird, die das Vorhandensein einer ausreichenden Transportrate für eine virtuelle Verbindung der höchsten Verbindungsklasse bezeichnet. Die Ermittlung und Bereithaltung von Informationen, die die auf den einzelnen Verbindungsleitungen einrichtbaren virtuellen Verbindungen bezeichnen, sowie das Absuchen auf Informationen, die eine vorgegebene Verbindungsklasse bezeichnen, kann im übrigen in an sich dem Fachmann geläufiger Weise erfolgen.

Gemäß einer anderen erfindungsgemäßen Maßnahme wird abweichend von der oben genannten Maßnahme eine der niedrigsten Verbindungsklasse zugehörige virtuelle Verbindung auch dann eingerichtet, wenn die momentan zur Verfügung stehende Transportrate nur für die Einrichtung einer der niedrigsten Verbindungsklasse zugehörigen virtuellen Verbindung ausreicht. Diese Bedingung dieser Maßnahme ist auch dann erfüllt, wenn durch die Summe des Bedarfs an maximaler Nachrichtenzellenrate einer Mehrzahl von momentan eingerichteter virtueller Verbindungen die durch die niedrigste Verbindungsklasse vorgegebene Transportrate nicht überschritten wird. Eine weitere Bedingung dieser anderen erfindungsgemäßen Maßnahme besteht darin, daß keine virtuelle Verbindung eingerichtet wird, wenn die auf den einzelnen Verbindungsleitungen momentan zur Verfügung stehende Transportrate zum einen größer ist als die für die Übertragung einer der niedrigsten Verbindungsklasse zugehörigen virtuellen Verbindung erforderliche Transportrate und zum anderen kleiner ist als die für die Übertragung einer der höchsten Verbindungsklasse zugehörigen virtuellen Verbindung erforderliche Transportrate. Diese weitere Bedingung ist dann erfüllt, wenn weder die Prüfung auf die Einrichtbarkeit einer der höchsten Verbindungsklasse zugehörigen virtuellen Verbindung noch die Prüfung auf die Einrichtbarkeit einer der niedrigsten Verbindungsklasse zugehörigen virtuellen Verbindung ein positives Ergebnis erbringt.

Gemäß einer zusätzlichen erfindungsgemäßen Maßnahme wird bei einem gleichzeitigen Vorliegen einer Mehrzahl von Anforderungen nach Einrichtung von virtuellen Verbindungen mit unterschiedlichen Verbindungsklassen eine virtuelle Verbindung mit einer jeweils höchsten Verbindungsklasse priorisiert. Dabei kann bei einem gleichzeitigen Vorliegen von Anforderungen einer Mehrzahl von virtuellen Verbindungen, die der jeweiligen höchsten Verbindungsklasse zugehören, diejenige Verbindung priorisiert werden, deren Anforderung zuerst eingetroffen ist, oder eine virtuelle Verbindung nach einem Zufallsprinzip ausgewählt werden, wenn eine Priorisierung aus anderen Gründen nicht als erforderlich erscheint.

Die oben näher beschriebenen Verfahren zur Einrichtung von virtuellen Verbindungen können beispielsweise bei der Belegung von zwei Breitvermittlungsstellen verbindenden Verbindungsleitungen zum Einsatz kommen. Ein weiteres Einsatzgebiet ist bei der Belegung von zwei Koppelstufen einer Breitbandvermittlungsstelle verbindenden Zwischenleitungen gegeben.

## Patentansprüche

1. Verfahren zum Einrichten von virtuellen Verbindungen mit unterschiedlichen maximalen Nachrichtenzellenraten in einem Übertragungssystem, in dem
- zwei Kommunikationseinrichtungen über mindestens eine Verbindungsleitung verbunden sind
- jede Verbindungsleitung eine vorgegebene maximale Transportrate von Nachrichtenzellen aufweist
- auf jeder Verbindungsleitung eine Vielzahl von virtuellen Verbindungen einrichtbar ist
- im Zuge von jeweiligen virtuellen Verbindungen Nachrichtenzellen nach einem asynchronen Übertragungsverfahren übertragen werden
- jede Nachrichtenzelle eine vorgegebene Länge aufweist
- jede einzurichtende virtuelle Verbindung nach Maßgabe ihrer maximalen Nachrichtenzellenrate einer aus einer Mehrzahl von unterschiedlichen Verbindungsklassen zugeordnet wird
- in einer Wegesucheinrichtung Informationen über die Anzahl und die Verbindungsklassen von auf den einzelnen Verbindungsleitungen momentan einrichtbaren virtuellen Verbindungen bereitgehalten werden,
**dadurch gekennzeichnet,** daß
eine virtuelle Verbindung nur dann eingerichtet wird, wenn auf den einzelnen Verbindungsleitungen momentan zumindest eine der höchsten Verbindungsklasse zugehörige virtuelle Verbindung einrichtbar ist.

2. Verfahren zum Einrichten von virtuellen Verbindungen mit unterschiedlichen maximalen Nachrichtenzellenraten in einem Übertragungssystem, in dem
- zwei Kommunikationseinrichtungen über mindestens eine Verbindungsleitung verbunden sind
- jede Verbindungsleitung eine vorgegebene maximale Transportrate von Nachrichtenzellen aufweist
- auf jeder Verbindungsleitung eine Vielzahl von virtuellen Verbindungen einrichtbar ist
- im Zuge von jeweiligen virtuellen Verbindungen Nachrichtenzellen nach einem asynchronen Übertragungsverfahren übertragen werden
- jede Nachrichtenzelle eine vorgegebene Länge aufweist
- jede einzurichtende virtuelle Verbindung nach Maßgabe ihrer maximalen Nachrichtenzellenrate einer aus einer Mehrzahl von unterschiedlichen Verbindungsklassen zugeordnet wird
- in einer Wegesucheinrichtung Informationen über die Anzahl und die Verbindungsklassen von auf den einzelnen Verbindungsleitungen momentan einrichtbaren virtuellen Verbindungen bereitgehalten werden,
**dadurch gekennzeichnet,** daß
- für den Fall, daß die momentan auf den einzelnen Verbindungsleitungen zur Verfügung stehende Transportrate für die Übertragung zumindest einer der höchsten Verbindungsklasse zugehörigen virtuellen Verbindung ausreicht, jede virtuelle Verbindung eingerichtet wird
- für den Fall, daß die momentan auf den einzelnen Verbindungsleitungen zur Verfügung stehende Transportrate nur für die Übertragung einer der niedrigsten Verbindungsklasse zugehörigen virtuellen Verbindung ausreicht, nur eine virtuelle Verbindung der niedrigsten Verbindungsklasse eingerichtet wird und
- für den Fall, daß die momentan auf den einzelnen Verbindungsleitungen zur Verfügung stehende Transportrate zum einen größer ist als die für die Übertragung einer der niedrigsten Verbindungsklasse zugehörigen virtuellen Verbindung erforderliche Transportrate und zum andern kleiner ist als die für die Übertragung einer der höchsten Verbindungsklasse zugehörigen virtuellen Verbindung erforderliche Transportrate keine virtuelle Verbindung eingerichtet wird.

3. Verfahren nach einem der Ansprüche 1 oder 2,
**dadurch gekennzeichnet,** daß
bei gleichzeitigem Vorliegen einer Mehrzahl von Anforderungen nach Einrichtung von virtuellen Verbindungen mit unterschiedlichen Verbindungsklassen eine virtuelle Verbindung mit einer jeweils höchsten Verbindungsklasse priorisiert wird.

4. Schaltungsanordnung zur Durchführung eines der Verfahren nach den Ansprüchen 1 bis 3,
**dadurch gekennzeichnet,** daß
die Kommunikationseinrichtungen als Bestandteil zweier Breitbandvermittlungsstellen gegeben sind.

5. Schaltungsanordnung zur Durchführung eines der Verfahren nach den Ansprüchen 1 bis 3,
**dadurch gekennzeichnet,** daß
die Kommunikationseinrichtungen als Bestandteil zweier Koppelstufen einer Breitbandvermittlungsstelle gegeben sind.
